# EUROPÄISCHE PATENTSCHRIFT

(11) **EP 1 156 720 B1**
(45) Veröffentlichungstag und Bekanntmachung des Hinweises auf die Patenterteilung: **23.02.2005**
(21) Anmeldenummer: 00907596.1
(22) Anmeldetag: 21.02.2000
(51) Int. Cl.: A23L 1/318, A23L 1/315

(54) **VERFAHREN ZUM HERSTELLEN EINES NAHRUNGSMITTELPRODUKTES AUF DER BASIS VON FLEISCH UND NAHRUNGSMITTELPRODUKT AUF DER BASIS VON FLEISCH**
METHOD FOR PRODUCING A FOOD PRODUCT ON THE BASIS OF MEAT AND FOOD PRODUCT ON THE BASIS OF MEAT
PROCEDE DE FABRICATION D'UN PRODUIT ALIMENTAIRE A BASE DE VIANDE ET PRODUIT ALIMENTAIRE A BASE DE VIANDE

(30) Priorität: 27.02.1999 DE 19908624
(43) Veröffentlichungstag der Anmeldung: 28.11.2001
(73) Patentinhaber: Wiesenhof Geflügel-Kontor GmbH, 49429 Visbek (DE)
(72) Erfinder: WESJOHANN, Paul-Heinz, D-49429 Visbek/Rechterfeld (DE); STROER, Bernhard, 49767 Twist (DE)
(74) Vertreter: Siemons, Norbert, Dr.-Ing.
(86) Internationale Anmeldenummer: PCT/EP2000/001440
(87) Internationale Veröffentlichungsnummer: WO 2000/051448

(56) Entgegenhaltungen:
- EP-A- 0 181 024
- EP-A- 0 565 222
- WO-A-96/23416
- WO-A-97/10717
- FR-A- 2 707 460
- US-A- 3 537 864
- US-A- 3 924 295

## Beschreibung

Die Erfindung betrifft ein Verfahren zum Herstellen eines Nahrungsmittelproduktes auf der Basis von Fleisch und ein Nahrungsmittelprodukt auf der Basis von Fleisch.

Nach den Leitsätzen des deutschen Lebensmittelbuches sind alle für den Menschen verzehrbaren Teile von Tieren als Fleisch definiert. Dies umfaßt neben Muskel- und Fettgewebe auch Organe, Blut, Knochen und Haut. Auch deren Zubereitungen und Verarbeitungsformen sind eingeschlossen.

"Fleischerzeugnisse" ist ein allgemeiner warenkundlicher Begriff, der in den Leitsätzen des deutschen Lebensmittelbuches (Fleisch und Fleischerzeugnisse) niedergelegt ist. Danach sind Fleischerzeugnisse Erzeugnisse, die ausschließlich oder überwiegend (mindestens 50 %) aus Fleisch bestehen. Fleisch sind alle Teile von geschlachteten oder erlegten Tieren, die zum Genuß für Menschen bestimmt sind.

Von einem Fleischerzeugnis (im Gegensatz zu Fleisch) wird immer dann gesprochen, wenn Fleisch zubereitet wird, was in der Mehrzahl mit einer auf. seine Haltbarkeit einwirkenden Behandlung verbunden ist. Hierzu zählen vor allem das Erhitzen (z.B. gegarte Schnitzel, Kochwurst), Säuern (z.B. Sauerbraten), Pökeln und Salzen (z.B. Rohschinken) und Trocknen (z.B. Rohwurst), nicht dagegen die Kältebehandlung (Kühlen, Gefrieren), da sie nur während der direkten Anwendungen einwirkt.

Bei Fleischerzeugnissen unterscheidet man Stückware und Gemenge. Zur Stückware gehören Rohpökelware (z.B. Rollschinken) und Kochpökelware (z.B. Kochschinken). Die Gemenge umfassen Wurstwaren, gestückeltes Fleisch (z.B. Gulasch) und gewolftes Fleisch (z.B. Frikadelle).

Nach den Leitsätzen des deutschen Lebensmittelbuches (Fleisch und Fleischerzeugnisse) werden Formfleischerzeugnisse aus Fleischstücken nach mechanischer Vorbehandlung zur Freisetzung von Muskeleiweiß an den Oberflächen unter gleichzeitiger Auflockerung der Struktur (z.B. Poltern oder Tumbeln) auch unter Verwendung von Kochsalz oder Nitritpökelsalz hergestellt. Sie werden zu einer größeren Einheit (Stückware) zusammengefügt; sie behalten durch Hitze- oder Gefrierbehandlung ihre neue Form. Der Gewebeverband der verwendeten Fleischstücke bleibt im wesentlichen erhalten. Formfleischerzeugnisse weisen unbeschadet des bei der Herstellung eventuell erforderlichen Salzgehaltes die gleiche Zusammensetzung auf wie Erzeugnisse aus gewachsenem Fleisch, denen sie nachgebildet sind. Der bei der Herstellung auftretende Muskelabrieb (aus freigesetztem Muskeleiweiß entstehende brätähnliche Substanz) übersteigt, soweit in den Leitsätzen nichts anderes angegeben wird, nicht den Wert von 5 Vol.-% (bei Geflügelfleischerzeugnissen von 10 Vol.-%) im verzehrsfertigen zusammengefügten Fleischanteil. Bei der Herstellung wird kein gewolftes, gekuttertes oder in ähnlicher Weise zerkleinertes Fleisch verwendet.

Zur Vermeidung einer Verwechslung von Formfleischerzeugnissen mit vergleichbaren Erzeugnissen aus gewachsenem Fleisch wird in der Verkehrsbezeichnung das Wort "Formfleisch-" vorangestellt und außerdem in unmittelbarer Verbindung mit der Verkehrsbezeichnung und in gleicher Schriftgröße darauf hingewiesen, daß Fleischstücke zusammengesetzt sind (z.B. Formfleisch-Schinken, aus Schinkenstücken zusammengefügt, Formfleisch-Roulade, aus Fleischstücken zusammengefügt, Formfeisch-Gulasch, aus Fleischstücken zusammengefügt).

Gewachsenes Fleisch oder Fleisch am Stück ist so beschaffen, wie es am Körper des Tieres gewachsen ist, insbesondere hinsichtlich Aussehen, Zusammensetzung, Struktur und Geschmack. Nachteilig ist, daß es nur in anatomisch vorgegebener Form zur Verfügung steht, beispielsweise als Filet, Steak, Kotelett, Brust, Schenkel, Brustfilet oder anderes Fleischteilsrück. Formfleisch kann hingegen in praktisch beliebige Form gebracht werden, weicht jedoch hinsichtlich seiner Beschaffenheit von gewachsenem Fleisch oder Fleisch am Stück ab.

Die FR-A-2 707 460, WO-A-96/23416, US-A-3 537 864 offenbaren Verfahren zum Herstellen von Nahrungsmittelprodukten, bei denen geschnittenes Fleisch nach dem Marinieren in einer Form gefroren wird. Das gefrorene Fleisch kann für den Verzehr in Scheiben geschnitten werden.

Die WO-A-97/10717 bezieht sich auf das Zusammendrücken einzelner Fleischprodukte zwischen zwei gekühlten Kontaktflächen, um ein Nahrungsmittelprodukt mit gleichförmigem Dickenprofil zu erreichen.

Die US-A-3 924 295 betrifft ein Verfahren zum Formen von Fleischprodukten durch Erzeugen eines klebrigen Exudates auf der Oberfläche und Gefrieren und Expandieren von Fleischstücken in einer Form. Das resultierende Nahrungsmittelprodukt kann für Verpackung, Verteilung und Verzehr in Scheiben geschnitten werden.

Die EP-A-0 181 024 befaßt sich mit einem Verfahren zum Verarbeiten von Geflügel, bei dem Geflügelteile mariniert und mit einer Beschichtung versehen werden. Die resultierenden Nahrungsmittelprodukte sind für den direkten Verzehr nach dem Erwärmen bestimmt.

Die EP-A-0 565 222 bezieht sich auf ein gefrorenes und beschichtetes Fischprodukt, das eine Vielzahl von abwechselnden Lagen Fischmaterial und Lagen von eßbarem Material und zumindest eine nicht beschichtete Seite hat und auf ein Verfahren zum Herstellen eines solchen Produktes. Das Produkt hat einheitlich die Form einer rechteckigen Platte.

Davon ausgehend liegt der Erfindung die Aufgabe zugrunde, ein Verfahren zum Herstellen eines neuen Nahrungsmittelproduktes auf der Basis von Fleisch und ein neues Nahrungsmittelprodukt auf der Basis von Fleisch zu schaffen.

Die Aufgabe wird durch ein Verfahren mit den Merkmalen des Anspruches 1 und durch ein Nahrungsmittelprodukt mit den Merkmalen des Anspruches 24 gelöst.

Bei dem erfindungsgemäßen Verfahren zum Herstellen eines Nahrungsmittelproduktes auf der Basis von Fleisch wird
- ganzes gewachsenes Fleisch mit einer flüssigen Marinade getumbelt,
- das getumbelte Fleisch zu mindestens einem mehrere Stücke ganzen gewachsenen Fleisches umfassenden Formkörper gearbeitet,
- der Formkörper gefroren und
- der Formkörper, ein durch Zersägen des Formkörpers erhaltener Portionskörper oder ein anderes Teilstück des Formkörpers im gefrorenen oder tiefgefrorenen Zustand schonend in eine Form gedrückt, um eine der Form entsprechende Gestalt anzunehmen.

Vorteilhafte Ausgestaltungen des Verfahrens sind in den Unteransprüchen 2 bis 23 angegeben.

Das erfindungsgemäße Nahrungsmittelprodukt auf der Basis von Fleisch ist nach dem Verfahren gemäß einem der Ansprüche 1 bis 23 hergestellt.

Die erfindungsgemäße Technik geht anders als die Technik zur Herstellung von Formfleisch nicht von zerkleinerten oder geschnittenen Fleischstücken aus. Vielmehr verwendet sie ganzes gewachsenes Fleisch, d.h. anatomisch gewachsene Fleischkörper, die so beschaffen sind, wie sie am Körper des Schlachttieres gewachsen sind, bei denen also der natürliche Muskelverlauf und -zusammenhalt erhalten bleibt. Dabei kann es sich um sogenannte "Fleischteilstücke" handeln, insbesondere um Filet, Lende, Schinken, Brust, Schenkel oder Brustfilet, die in Lebensmitteltechnologie und -recht anatomisch eindeutig definiert und zugeordnet sind.

Beim Tumbeln wird flüssige Marinade an das Fleisch herangebracht bzw. in dieses eingearbeitet. Das Tumbeln wird in der Regel in einer Trommel mit Einbauten durchgeführt, die beim Drehen der Trommel schonend auf das zu behandelnde Gut einwirken.

Der Formkörper kann zum Beispiel ein Zylinder, eine Kugel, ein Block oder eine Platte sein. Das Formen und Gefrieren des Fleisches kann nacheinander oder gleichzeitig bzw. zeitlich überlappend erfolgen. Vorzugsweise wird der Formkörper tiefgefroren, wobei die Temperaturen insbesondere -15 °C bis -18 °C betragen können.

Überraschenderweise hält der Formkörper zusammen, auch ohne daß ein Zusatz von Verdickungsmitteln, Stabilisatoren oder ähnlichem erforderlich wäre. Das Marinieren und das Formen des Fleisches zu einem Formkörper ist sehr schonend durchführbar und ermöglicht eine vorteilhafte Würzung des Nahrungsmittelproduktes. Die Struktur, insbesondere die Zell-, Muskelund Faserstruktur des gewachsenen Fleisches, bleibt deshalb vollständig in dem Fleisch erhalten, das den Formkörper bildet. Das Nahrungsmittelprodukt hat ein besseres Aussehen, eine bessere Textur und einen besseren Biß als Formfleischprodukte und entspricht beim "Eßerlebnis" einem naturgewachsenen Fleisch. Das Nahrungsmittelprodukt hat damit die sensorischen Eigenschaften von gewachsenem Fleisch, weist jedoch hinsichtlich der Formgebung die Vorteile von Formfleisch auf, ohne die Definition von Formfleisch zu erfüllen. Infolgedessen kann eine Kalibrierung genauer durchgeführt werden als bei gewachsenem Fleisch aus einem Stück. Darüber hinaus sind Formkörper mit Abmessungen erreichbar, die die Größen gewachsenen Fleisches beträchtlich überschreiten, wodurch die Weiterverarbeitung begünstigt wird. Andererseits weist das erfindungsgemäße Produkt aufgrund seiner schonenden Herstellung nicht den wertmindemden Brätanteil von Formfleischerzeugnissen auf.

Als Fleischarten kommen Geflügelfleisch, Schweinefleisch, Rindfleisch, Kalbfleisch, Schaffleisch, Lammfleisch, Pferdefleisch, Ziegenfleisch oder Wild in Betracht oder auch Kombinationen verschiedener Fleischarten. Beim Geflügelfleisch kann es sich insbesondere um Hähnchenfleisch, Hühnerfleisch, Putenfleisch, Entenfleisch oder Gänsefleisch handeln. Als Teilstücke kommen insbesondere Filet oder Innenfilet in Betracht. Besonders vorteilhaft ist Hähnchenbrust-Filet und/oder Hähnchen-Innenfilet, da dieses nach Tumbeln mit flüssiger Marinade eine besonders starke Klebrigkeit hat und überdies besonders zart und schmackhaft ist. Aus Gründen der Verarbeitung und Schaffung eines besonders hochwertigen Produktes wird bevorzugt knochenloses Fleisch verwendet.

Marinaden werden in der Lebensmitteltechnik als saure, gewürzhaltige Aufgüsse zum Einlegen von Lebensmitteln verwendet. Bevorzugt kommt eine flüssige Marinade zum Einsatz, die Gewürz und/oder Salz und/oder Wasser und/oder Öl-in-Wasser-Emulsion und/oder Wasser-in-Öl-Emulsion und/oder Essig und/oder Wein enthält.

Bevorzugt wird das getumbelte Fleisch zu mindestens einer Platte geformt. Zum Formen und Gefrieren der mindestens einen Platte kann ein Plattenfroster zum Einsatz kommen. Plattenfroster haben eine Vielzahl paralleler Platten, in denen Kanäle für Kühlmittel verlaufen. Zwischen den Platten ausgebildete Spalten zur Aufnahme des Gefrierproduktes können mittels eines Hydraulikzylinders verringert werden. Es gibt Plattengefrierapparate mit horizontaler und vertikaler Plattenstellung. Bislang werden sie vor allem zum Einfrieren von Fischfilets, ganzen Fischen in Blöcken sowie von fließfähigen oder pastösen Massen (Rahm, Eigelb) verwendet. Bei vertikaler Plattenanordnung kann das getumbelte Fleisch auf die oberen Öffnungen der Spalte gegeben werden. Nach Eindringen in die Spalte werden diese durch Betätigen des Hydraulikzylinders verringert und die dabei geformten Platten tiefgefroren.

Die gefrorenen Platten kommen insbesondere für Großküchen oder andere Weiterverarbeiter in Betracht. Vorzugsweise werden sie zu kleineren Portionsplatten zersägt. Hierbei kann eine Bandsäge zum Einsatz kommen. Vorzugsweise werden die Platten zunächst parallel zu ihren Hauptausdehnungsrichtungen und dann vertikal zu den Haugtausdehnungsrichtungen zersägt. Größe und Gewicht der Portionsplatten werden zweckentsprechend gewählt, insbesondere im Hinblick auf die Verwendung (z.B. Beilage, Halbfertiggericht oder Fertiggericht) und die Personenzahl (z.B. Single-, Familien- oder Großverbraucherportion).

Eine Weiterverarbeitung des mindestens einen Formkörpers oder des Portionskörpers kann darin bestehen, daß auf eine Seite eine feuchtehaltige, verzehrbare Masse als Deckschicht aufgebracht wird und der Formkörper oder Portionskörper mit der Deckschicht gefroren werden. Die Deckschicht kann mindestens eine Seite des Formkörpers oder Portionskörpers mehr oder weniger bedecken. Durch das Frieren wird eine Verbindung der verzehrbaren Masse mit dem Formkörper oder Portionskörper erreicht, die möglicherweise durch eine Wechselwirkung zwischen Eiskristallen gefördert wird, die sich in der verzehrbaren Masse ausbilden und in dem Formkörper oder Portionskörper vorhanden sind.

Die Deckschicht kann als Dekoration und/oder zur Würzung des Fleisches und/oder als Geschmacksverbesserer und/oder als Beilage und/oder der Verbesserung des Beißgefuhles etc. dienen. Sie kann insbesondere Gemüse und/oder Früchte und/oder Fett und/oder Sauerrahm und/oder Weizenmehl und/oder Panade und/oder Gewürze umfassen. Ihre Bestandteile können bereitgestellt, verwogen und gekuttert und dann auf die Platte oder die Portionsplatten aufgebracht werden. Bevorzugt wird die Masse gekühlt auf den Formkörper oder Portionskörper aufgebracht, um eine Vermehrung von Mikroorganismen einzuschränken. Dabei liegt die Temperatur der Masse vorzugsweise im Bereich von 10 °C bis 0 °C.

Gemäß einer weiteren Ausgestaltung kann auf die Deckschicht eine weitere verzehrbare Masse als weitere Deckschicht aufgebracht werden. Die weitere Deckschicht kann insbesondere der Dekoration oder weiteren Geschmacksbeeinflussungen dienen und beispielsweise Käse und/oder Kräuter und/oder geröstete, ggfs. gewürzte Brotstückchen umfassen.

Bevorzugt wird die Masse und/oder die weitere Masse mittels eines Abfüllers auf durchlaufende Formkörper und/oder durchlaufende Portionskörper aufgetragen. Dafür kann der Abfüller eine Breitschlitzdüse haben und/oder eine Spritzvorrichtung.

Der Formkörper, die Platte, der Portionskörper, die Portionsplatte oder ein anderes Teilstück des Formkörpers werden im gefrorenen oder vorzugsweise tiefgefrorenen Zustand schonend in eine Form gedrückt, um eine der Form entsprechende Gestalt anzunehmen. Es kann beispielsweise mittels eines Stempels durchgeführt werden. Auf diese Weise kann dem Nahrungsmittelprodukt eine praktisch beliebige - auch unregelmäßige - Form gegeben werden. So kann dem Nahrungsmittelprodukt beispielsweise die Form eines Fleischteilstückes gegeben werden, beispielsweise die eines Hähnchenbrustfilets.

Falls mit einer Form und einem zugeordneten Stempel gearbeitet wird, besteht die Gefahr, daß Reste anfallen, wenn der Stempel den Querschnitt der Form verschließt Dies wird gemäß einer vorteilhaften Ausgestaltung vermieden, bei der das Volumen des Formkörpers oder des Portionskörpers so auf das Volumen der Form abgestimmt ist, daß der Formkörper oder der Portionskörper den Hohlraum in der Form frühestens ausfüllt, wenn ein Stempel den Formquerschnitt verschließt. Vorzugsweise hat hierzu der Formkörper oder der Portionskörper ein geringeres Volumen als die Form.

Das in der Form schonend geformte oder "geshapte" Produkt hat die bereits beschriebenen Vorteile des Nahrungsmittelproduktes. Insbesondere bleibt die Struktur des gewachsenen Fleisches erhalten. Das geshapte Produkt hat jedoch darüber hinaus gegenüber herkömmlichen Formfleischprodukten ein besseres Aussehen, eine bessere Textur und'einen besseren Biß und ent spricht beim "Eßerlebnis" praktisch vollkommen einem naturgewachsenen Fleisch.

Das geshapte Produkt kann entsprechend dem Formkörper oder Portionskörper weiterverarbeitet werden, wobei grundsätzlich auch eine verzehrbare Masse als Deckschicht aufgebracht werden kann.

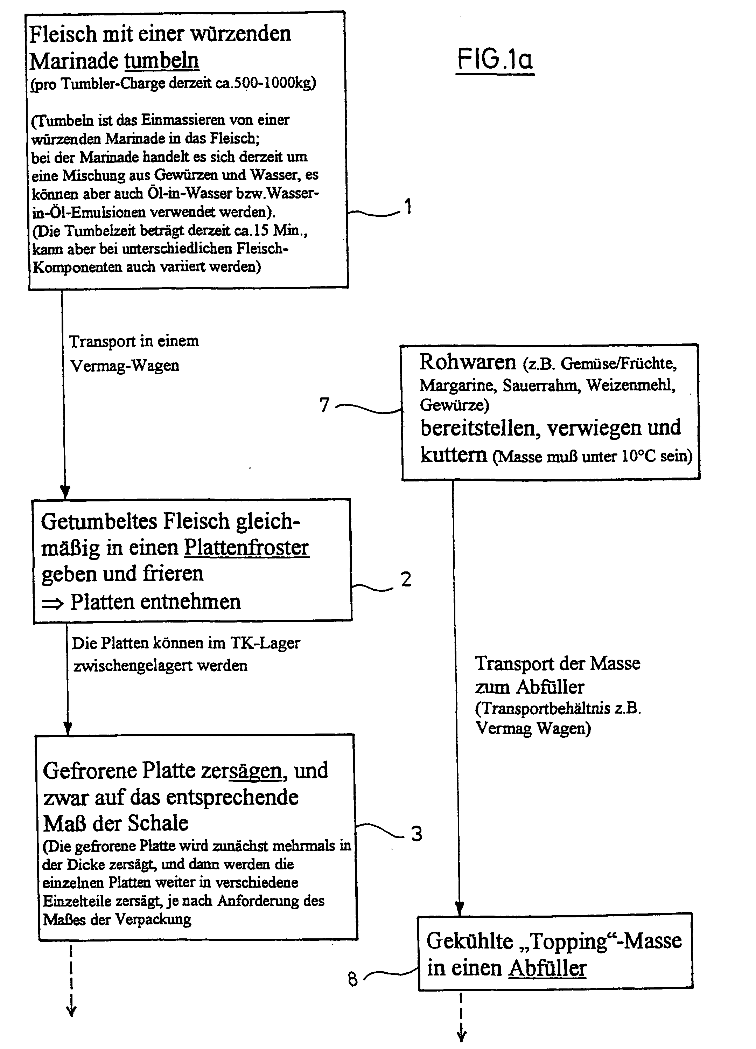

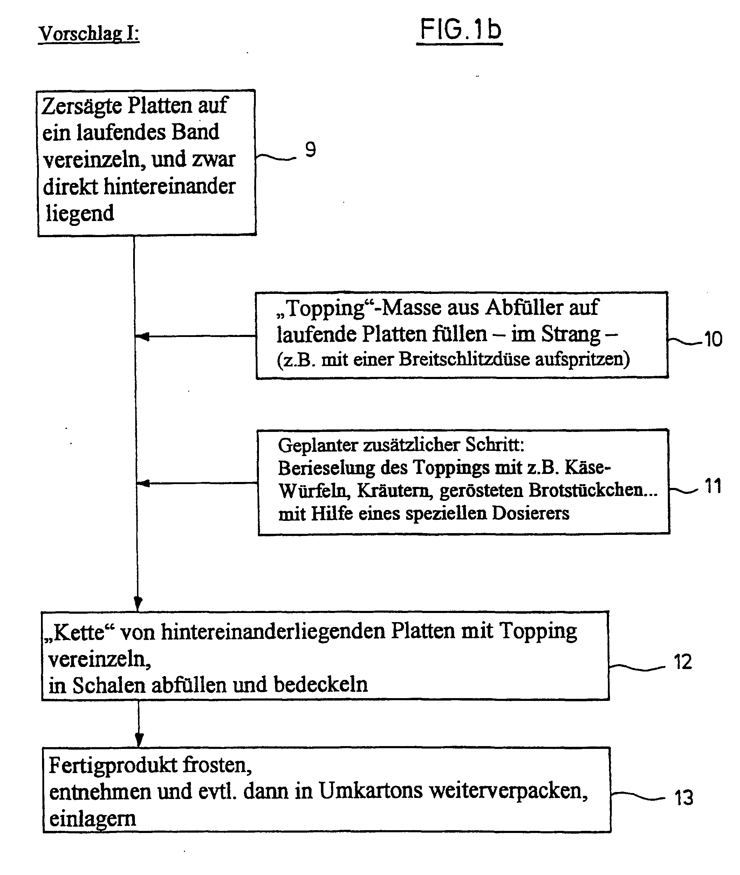

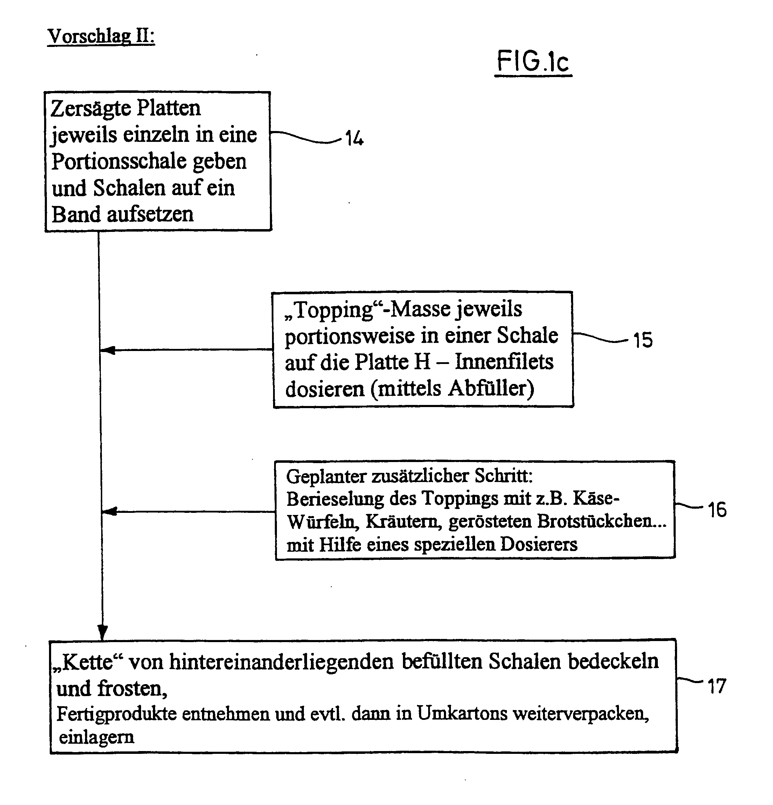

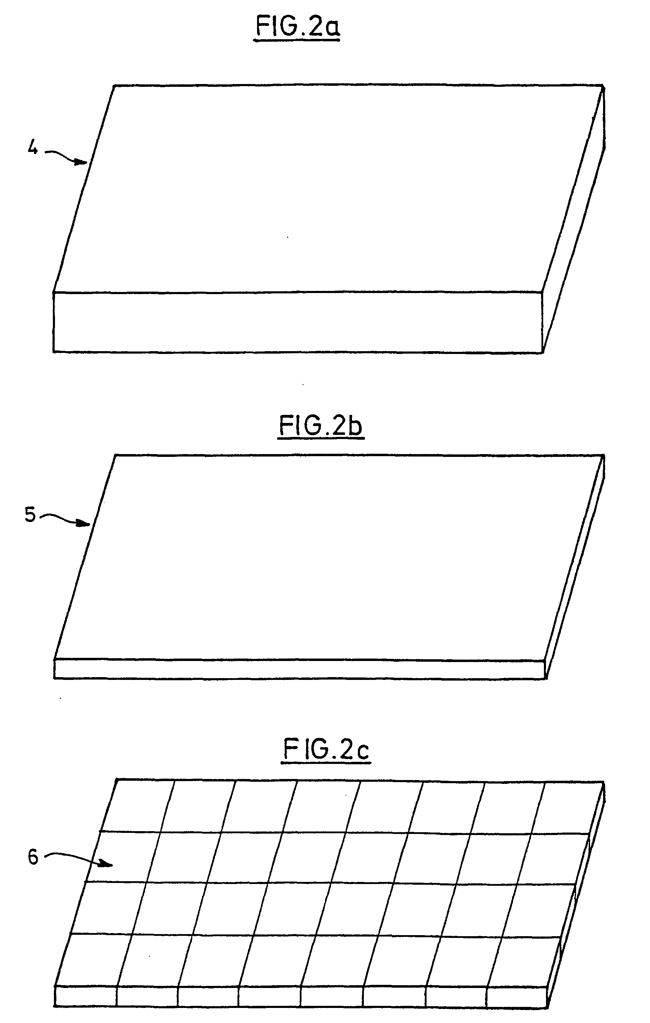

Die Erfindung wird nachfolgend anhand eines Ablaufschemas gemäß anliegendem Blockdiagramm (Fig. 1a, b, c), eines Schemas der Plattenaufteilung (Fig. 2a, b, c) und eines Ausführungsbeispieles näher erläutert:

Gemäß Fig. 1a wird in einem ersten Verfahrensabschnitt eine Platte Fleisch vorbereitet, die im Speziellen Hähnchen-Innenfilets enthalten kann. Des weiteren wird in diesem Verfahrensabschnitt eine Masse vorbereitet, die als Deckschicht aufgetragen werden kann.

In einem ersten Verfahrensschritt wird das Fleisch mit einer würzenden Marinade getumbelt. In einem handelsüblichen Tumbler können beispielsweise Chargen von ca. 500 bis 1000 kg verarbeitet werden.

Beim Tumbeln wird die würzende, flüssige Marinade in das Fleisch eingearbeitet. Bei der Marinade handelt es sich beispielsweise um eine Mischung aus Gewürz und Wasser. Es können aber auch Öl-in-Wasser- oder Wasserin-Öl-Emulsionen verwendet werden.

Die Tumbelzeit kann bei Hähnchen-Innenfilets etwa 15 Minuten betragen, kann aber bei anderen Fleischarten auch verändert werden.

Das getumbelte Fleisch kann in einem rollbaren Behältnis aus Edelstahl (z.B. Vemag-Wagen) zu einem Plattenfroster transportiert werden. Es wird in einem zweiten Verfahrensschritt 2 gleichmäßig in den Plattenfroster gegeben und darin zu Platten geformt und gefroren. Danach werden die Platten entnommen.

Die Platten können in einem Tiefkühl-Lager zwischengelagert werden.

Danach werden die gefrorenen Platten in einem dritten Verfahrensschritt 3 zersägt, und zwar auf das Maß einer Schale, die Bestandteil der Verpackung für das Nahrungsmittelprodukt ist.

Das Sägen kann gemäß Fig. 2a, b, c so vonstatten gehen, daß die Platte 4 zunächst mehrmals in der Dicke zersägt wird und daß dann die dünneren Platten 5 weiter in eine Vielzahl Portionsplatten 6 zersägt werden, je nach den Abmessungen der Verpackung.

Von den vorstehenden Schritten 1 bis 3 separat werden in einem Verfahrensschritt 7 Rohwaren (z.B. Gemüse oder Früchte, Margarine, Sauerrahm, Weizenmehl, Gewürze) bereitgestellt, verwogen und gekuttert. Die Temperatur dieser Masse, die eine Konsistenz ähnlich einem Brotaufstrich haben kann, beträgt zwischen 10 und 0 °C. Die Stückigkeit von Gemüse und/oder Früchten in der Masse kann bewußt gewählt werden.

Die Masse kann mittels eines rollbaren Behältnisses (z.B. Vemag-Wagen) zum Abfüller transportiert und dort in einem Schritt 8 eingefüllt werden.

Für die folgenden Verfahrensabschnitte sieht das Blockbild zwei Varianten vor:

Gemäß Vorschlag I (Fig. 1b) werden die zersägten Platten in einem Schritt 9 auf einem laufenden Band vereinzelt, wobei sie allerdings auf dem Band direkt hintereinander liegend angeordnet sind. Dann wird in Schritt 10 ein Strang der verzehrbaren Masse aus dem Abfüller als Deckschicht auf die laufenden Platten aufgebracht, beispielsweise mittels einer Breitschlitzdüse.

Anschließend kann in einem zusätzlichen Schritt 11 eine Berieselung der Deckschicht mit einer weiteren verzehrbaren Masse erfolgen, die eine weitere Deckschicht bildet und beispielsweise aus Käsewürfeln, Kräutern, gerösteten Brotstückchen etc. besteht. Dies kann mittels eines speziellen Dosierers geschehen.

Danach wird in Schritt 12 die "Kette" der hintereinander liegenden Platten vereinzelt - beispielsweise durch Übergabe auf ein mit größerer Geschwindigkeit laufendes Band - in Schalen abgefüllt und die Schalen werden bedeckelt.

Schließlich wird in Schritt 13 das solchermaßen verpackte Produkt tiefgefroren. Das tiefgefrorene Fertigprodukt wird aus dem Froster entnommen und gegebenenfalls in Umkartons weiterverpackt bzw. eingelagert.

Der Vorschlag II (Fig. 1c) sieht vor, daß die Portionsplatten zunächst in Schritt 14 jeweils einzeln in eine Portionsschale gegeben und die Schalen auf ein Band aufgesetzt werden.

Danach wird in Schritt 15 die verzehrbare Masse mittels des Abfüllers jeweils portionsweise in eine Schale als Deckschicht auf die Portionsplatte dosiert.

Danach kann in einem zusätzlichen Schritt 16 mittels eines speziellen Dosierers eine Berieselung der Deckschicht mit einer weiteren verzehrbaren Masse als weiterer Deckschicht erfolgen.

Die "Kette" der hintereinander laufenden befüllten Schalen wird anschließend in Schritt 17 verschlossen und tiefgefroren. Schließlich können die Fertigprodukte entnommen und eventuell in Umkartons weiterverpackt und gegebenenfalls eingelagert werden.

Ein Ausführungsbeispiel sieht vor, Hähnchen-Innenfilets mit einer flüssigen Marinade, die eine Mischung aus Gewürzen und Wasser umfaßt, zu tumbeln.

Die getumbelten Hähnchen-Innenfilets werden im Plattenfroster zu Platten geformt und gefroren, z.B. mit Abmessungen von 1,5 x 0,8 x 0,1 m. Die Platten werden entnommen und in Portionsplatten mit Gewichten von z.B. ca. 100 bis 300 g zersägt.

Auf die tiefgefrorenen Portionsplatten wird eine frische Masse aufgegeben, die sich auf den Portionsplatten verteilt. Zutaten der Masse sind u.a. Weizenmehl, Fette und unterschiedliche Gemüsesorten wie Broccoli, Spinat, Tomate oder Früchte etc.

Das Produkt wird noch einmal nachgefrostet. Die Deckschicht bleibt dadurch auf der Oberfläche der Portionsplatten des Hähnchen-Innenfilets haften.

Das Produkt wird in eine Alu- oder Kunststoffschale gelegt, in der es auch zubereitet wird (Backofen: ca. ½ bis ¾ Stunde oder: Mikrowelle).

## Patentansprüche

1. Verfahren zum Herstellen eines Nahrungsmittelproduktes auf der Basis von Fleisch, bei dem
- ganzes gewachsenes Fleisch mit einer flüssigen Marinade getumbelt wird,
- das getumbelte Fleisch zu mindestens einem mehrere Stücke ganzen gewachsenen Fleisches umfassenden Formkörper gearbeitet wird,
- der Formkörper gefroren wird und
- der Formkörper ein durch Zersägen des Formkörpers erhaltener Portionskörper oder ein anderes Teilstück des Formkörpers im gefrorenen oder tiefgefrorenen Zustand schonend in eine Form gedrückt wird, um eine der Form entsprechende Gestalt anzunehmen.

2. Verfahren nach Anspruch 1, dem Abschnitte ganzen gewachsenen Fleisches zugeführt werden.

3. Verfahren nach Anspruch 1 oder 2, bei dem das Fleisch Geflügelfleisch, Schweinefleisch, Rindfleisch, Kalbfleisch, Schaffleisch, Lammfleisch, Pferdefleisch, Ziegenfleisch oder Wild ist oder mehrere verschiedene Fleischarten umfaßt.

4. Verfahren nach Anspruch 3, bei dem das Fleisch Hähnchenfleisch, Hühnerfleisch, Putenfleisch, Entenfleisch oder Gänsefleisch ist.

5. Verfahren nach einem der Ansprüche I bis 4, bei dem das Fleisch Filet oder Innenfilet ist.

6. Verfahren nach einem der Ansprüche 1 bis 5, bei dem das Fleisch Hähnchenbrustfilet und/oder Hähnchen-Innenfilet ist.

7. Verfahren nach einem der Ansprüche 1 bis 6, bei dem die flüssige Marinade Gewürz und/oder Salz und/oder Wasser und/oder Öl-in-Wasser-Emulsion und/oder Wasser-in-Öl-Emulsion und/oder Essig und/oder Wein enthält.

8. Verfahren nach einem der Ansprüche I bis 7, bei dem das getumbelte Fleisch zu mindestens einer Platte gearbeitet und gefroren wird.

9. Verfahren nach Anspruch 8, bei dem das getumbelte Fleisch im Plattenfroster zu mindestens einer Platte gearbeitet und gefroren wird.

10. Verfahren nach einem der Ansprüche 1 bis 9, bei dem der Formkörper tiefgefroren wird.

11. Verfahren nach einem der Ansprüche 1 bis 10, bei dem der Formkörper mittels einer Bandsäge in Portionskörper zersägt wird.

12. Verfahren nach einem der Ansprüche 8 bis 11, bei dem die Platte zunächst parallel zu ihren Hauptausdehnungsrichtungen und dann vertikal zu ihren Hauptausdehnungsrichtungen zersägt wird.

13. Verfahren nach einem der Ansprüche 1 bis 12, bei dem der Formkörper in Portionsplatten zersägt wird.

14. Verfahren nach einem der Ansprüche 1 bis 13, bei dem auf den Formkörper und/oder den Portionskörper eine feuchtehaltige, verzehrbare Masse als Deckschicht aufgebracht wird und der Formkörper und/oder die Portionskörper mit der Deckschicht gefroren wird/werden.

15. Verfahren nach Anspruch 14, bei dem die Masse Gemüse und/oder Früchte und/oder Fett und/oder Sauerrahm und/oder Weizenmehl und/oder Panade und/oder Gewürze umfaßt.

16. Verfahren nach Anspruch 14 oder 15, bei dem die Bestandteile der Masse bereitgestellt, verwogen und gekuttert werden.

17. Verfahren nach einem der Ansprüche 14 bis 16, bei dem die verzehrbare Masse gekühlt auf den Formkörper und/oder die Portionskörper aufgebracht wird.

18. Verfahren nach Anspruch 17, bei dem die verzehrbare Masse auf eine Temperatur von 10 °C bis 0 °C gekühlt wird.

19. Verfahren nach einem der Ansprüche 14 bis 18, bei dem auf die Deckschicht eine weitere verzehrbare Masse als weitere Deckschicht aufgebracht wird.

20. Verfahren nach Anspruch 19, bei dem die weitere Masse Käse und/oder Kräuter und/oder geröstete Brotstückchen umfaßt.

21. Verfahren nach einem der Ansprüche 14 bis 20, bei dem die Masse und/oder die weitere Masse mittels eines Abfüllers auf durchlaufende Formkörper und/oder Portionskörper aufgetragen wird.

22. Verfahren nach einem der Ansprüche 14 bis 21, bei dem die Formkörper und/oder Portionskörper mit der Masse und/oder weiteren Masse tiefgefroren werden.

23. Verfahren nach einem der Ansprüche 1 bis 22, bei dem das Volumen des Formkörpers, des Portionskörpers oder des Teilstückes des Formkörpers so auf das Volumen der Form abgestimmt wird, daß der Formkörper, der Portionskörper oder das Teilstück des Formkörpers den Hohlraum in der Form frühestens ausfüllt, wenn ein Stempel den Formquerschnitt schließt.

24. Nahrungsmittelprodukt auf der Basis von Fleisch, hergestellt nach dem Verfahren gemäß einem der Ansprüche 1 bis 23.

## Claims

1. A method for the manufacture of a meat-based food product wherein
. whole grown meat is tumbled in a liquid marinade,
. the tumbled meat is formed into at least one restructured body comprising a plurality of pieces of whole grown meat,
. the restructured-meat body is frozen, and
. the restructured-meat body, a portion body obtained by sawing the restructured-meat body or another piece of the restructured-meat body is gently pressed into a mould to make it assume a shape conforming to the mould.

2. The method according to claim 1 to which portions of whole grown meat are fed.

3. The method according to claim 1 or 2 wherein the meat is poultry, pork, beef, veal, mutton, lamb, horse, goat, game or comprises several different meat types.

4. The method according to claim 3 wherein the meat is young chicken meat, hen meat, turkey meat, duck meat or goose meat.

5. The method according to any one of claims 1 to 4 wherein the meat is fillet or inner fillet.

6. The method according to any one of claims 1 to 5 wherein the meat is young chicken brisket fillet and/or young chicken inner fillet.

7. The method according to any one of claims 1 to 6 wherein the liquid marinade contains spices and/or salt and/or water and/or an oil-in-water emulsion and/or a water-in-oil emulsion and/or vinegar and/or wine.

8. The method according to any one of claims 1 to 7 wherein the tumbled meat is formed into at least one slab and is frozen.

9. The method according to claim 8 wherein the tumbled meat is formed into at least one slab and is frozen in the plate freezer.

10. The method according to any one of claims 1 to 9 wherein the restructured-meat body is deep-frozen.

11. The method according to any one of claims 1 to 10 wherein the restructured body is sawn up into smaller portioned bodies by means of a bandsaw.

12. The method according to claims 8 to 11 wherein the plate initially is sawn up in parallel with its main directions of extension and then is sawn up vertically to its main directions of extension.

13. The method according to any one of claims 1 to 12 wherein the restructured-meat body is sawn up into portioned slabs.

14. The method according to any one of claims 1 to 13 wherein a moisture-containing, eatable mass is applied to one side as a topping and the restructured body and/or the portioned bodies is/are frozen along with the topping.

15. The method according to claim 14 wherein the mass comprises vegetables and/or fruits and/or fat and/or sour cream and/or wheat flour and/or panada and/or seasonings.

16. The method according to claim 14 or 15 wherein the ingredients are made available, weighed and chopped.

17. The method according to claims 14 to 16 wherein the eatable mass is placed in a refrigerated condition on the restructured-meat body and/or portioned body.

18. The method according to claim 18 wherein the eatable mass is refrigerated down to a temperature ranging between 10 °C and 0 °C.

19. The method according to any one of claims 14 to 18 wherein another eatable mass is placed on the topping as a further topping.

20. The method according to claim 19 wherein the further mass comprises cheese and/or herbs and/or roast or possibly seasoned bread bits.

21. The method according to any one of claims 14 to 20 wherein the mass and/or further mass is/are deposited onto passing-through restructured-meat bodies and/or portioned bodies by means of a filling mechanism.

22. The method according to any one of claims 14 to 21 wherein the restructured-meat bodies and/or portioned bodies with the mass and/or further mass are deep-frozen.

23. The method according to any one of claims 1 to 22 wherein the volume of the restructured-meat body, portioned body or piece of the restructured-meat body is adapted so as to match the volume of the mould so that the restructured-meat body, portioned body or piece of the restructured-meat body fills the mould cavity, at the earliest, at a point where a die closes the cross-section.

24. A meat-based food product, manufactured according to the method of any one of claims 1 to 23.

## Revendications

1. Procédé pour la fabrication d'un produit alimentaire à base de viande, dans lequel
- de la viande naturelle entière est mélangée par culbutage avec une marinade liquide,
- la viande mélangée par culbutage est transformée en au moins un corps façonné comprenant plusieurs morceaux de viande naturelle entière,
- le corps façonné est congelé, et
- le corps façonné, un corps de portion obtenu par sciage du corps façonné, ou un autre morceau partiel du corps façonné est enfoncé à l'état gelé ou surgelé avec ménagement dans un moule afin de lui faire prendre une forme correspondant au moule.

2. Procédé selon la revendication 1, auquel des morceaux de viande naturelle entière sont utilisés.

3. Procédé selon la revendication 1 ou 2, dans lequel la viande est de la viande de volaille, de la viande de porc, de la viande de boeuf, de la viande de veau, de la viande de mouton, de la viande d'agneau, de la viande de cheval, de la viande de chèvre ou du gibier ou comprend plusieurs sortes différentes de viande.

4. Procédé selon la revendication 3, dans lequel la viande est de la viande de poulet, de la viande de poule, de la viande de dinde, de la viande de canard ou de la viande d'oie.

5. Procédé selon l'une des revendications 1 à 4, dans lequel la viande est un filet ou un filet intérieur.

6. Procédé selon l'une des revendications 1 à 5, dans lequel la viande est une escalope de poulet et/ou un filet de poulet.

7. Procédé selon l'une des revendications 1 à 6, dans lequel la marinade liquide contient des épices et/ou du sel et/ou de l'eau et/ou une émulsion d'huile dans l'eau et/ou une émulsion d'eau dans l'huile et/ou du vinaigre et/ou du vin.

8. Procédé selon l'une des revendications 1 à 7, dans lequel la viande mélangée par culbutage est transformée en au moins une plaque qui est congelée.

9. Procédé selon la revendication 8, dans lequel la viande mélangée par culbutage est transformée dans un congélateur de plaques en au moins une plaque qui est ensuite congelée.

10. Procédé selon l'une des revendications 1 à 9, dans lequel le corps façonné est surgelé.

11. Procédé selon l'une des revendications 1 à 10, dans lequel le corps façonné est scié en corps de portion moyennant une scie à ruban.

12. Procédé selon l'une des revendications 8 à 11, dans lequel la plaque est sciée d'abord parallèlement à ses directions d'extension principale et ensuite verticalement à ses directions d'extension principale.

13. Procédé selon l'une des revendications 1 à 12, dans lequel le corps façonné est scié en plaques de portion.

14. Procédé selon l'une des revendications 1 à 13 dans lequel une masse comestible contenant de l'humidité est appliquée comme couche de couverture sur le corps façonné ou sur le corps de portion, et en ce que le corps façonné et/ou le corps de portion sont congelés avec leur couche de couverture.

15. Procédé selon la revendication 14, dans lequel la masse contient des légumes et/ou des fruits et/ou de la graisse et/ou de la crème acidulée et/ou de la farine de froment et/ou de la panade et/ou des épices.

16. Procédé selon la revendication 14 ou 15, dans lequel les composants de la masse sont préparés, pesés et concassés.

17. Procédé selon l'une des revendications 14 à 16, dans lequel la masse comestible est appliquée à l'état refroidi au corps façonné et/ou aux corps de portion.

18. Procédé selon la revendication 17, dans lequel la masse comestible est refroidie à une température comprise entre 10°C et 0°C.

19. Procédé selon l'une des revendications 14 à 18, dans lequel une masse additionnelle comestible est appliquée sur la couche de couverture à titre de couche de couverture additionnelle.

20. Procédé selon la revendication 19, dans lequel la masse additionnelle contient du fromage et/ou des herbes et/ou des petits morceaux de pain.

21. Procédé selon l'une des revendications 14 à 20, dans lequel la masse et/ou la masse additionnelle est appliquée au moyen d'un emplisseur sur des corps façonnés et/ou des corps de portion en mouvement.

22. Procédé selon l'une des revendications 14 à 21, dans lequel les corps façonnés et/ou les corps de portion sont surgelés avec la masse et/ou la masse additionnelle.

23. Procédé selon l'une des revendications 1 à 22, dans lequel le volume du corps façonné, du corps de portion ou du morceau partiel du corps façonné est adapté de telle manière au volume du moule que le corps façonné, le corps de portion ou le morceau partiel du corps façonné remplit la cavité du moule au plus tôt quand un poinçon ferme la section du moule.

24. Produit alimentaire à base de viande, fabriqué par le procédé selon l'une des revendications 1 à 23.
